(19) Europäisches Patentamt

European Patent Office

Office européen des brevets

(11) **EP 1 667 140 A1**

(12) **EUROPEAN PATENT APPLICATION**
published in accordance with Art. 158(3) EPC

(43) Date of publication:
**07.06.2006 Bulletin 2006/23**

(51) Int Cl.:
***G11B 11/105*** (2000.01)

(21) Application number: **03818706.8**

(86) International application number:
**PCT/JP2003/011822**

(22) Date of filing: **17.09.2003**

(87) International publication number:
**WO 2005/029486 (31.03.2005 Gazette 2005/13)**

(84) Designated Contracting States:
**DE FR GB**

(71) Applicant: **FUJITSU LIMITED**
**Kawasaki-shi,**
**Kanagawa 211-8588 (JP)**

(72) Inventor: **AOYAMA, Nobuhide,**
**c/o FUJITSU LIMITED**
**Kawasaki-shi, Kanagawa 211-8588 (JP)**

(74) Representative: **Stebbing, Timothy Charles**
**Haseltine Lake & Co.,**
**Imperial House,**
**15-19 Kingsway**
**London WC2B 6UD (GB)**

(54) **OPTICAL INFORMATION PROCESSOR**

(57)     For a concurrent ROM-RAM recording medium, the present invention provides an optical information processing apparatus which can accurately read a RAM signal at the time of high-speed transfer without reducing a phase pit depth. The optical information processing apparatus is an optical information processing apparatus for controlling writing and reading of information on a concurrent ROM-RAM recording medium recording ROM signal information as a phase pit on a track and magneto-optically recording RAM signal information on the phase pit, comprising an optical system for forming two (2) first and second beam spots with an interval on the same track of the recording medium; a circuit unit for modulating the first beam spot intensity with a second ROM signal read by the second beam spot; and a circuit for detecting a RAM signal from a first ROM signal read by the first beam spot.

FIG. 3

EP 1 667 140 A1

**Description**

CROSS-REFERENCE TO RELATED APPLICATIONS

This application is a continuation of international application PCT/JP2003/011822, filed on September 17, 2003.

TECHNICAL FIELD

The present invention relates generally to an optical information processing apparatus, and more particularly, to an optical information processing apparatus using an optical element for recording and regeneration processing of ROM (fixed record) information and RAM (writable/readable record) information which are recorded and regenerated on the same recording medium.

BACKGROUND ART

As a technology for recording and regenerating ROM information and RAM information on the same recording medium, a concurrent ROM-RAM optical disk is known (e.g., non-patent document 1). In the concurrent ROM-RAM optical disk, a magnetic optical recording film is formed for recording and regenerating a RAM signal on a transparent substrate where a phase pit signal are formed as a ROM signal by physical concavity and convexity.

One pickup device can detect the ROM signal (phase pit signal) and the RAM signal (magnetic optical signal) and perform overlapping recording of the RAM signal onto the phase pit. Therefore, as compared to a conventional ROM disk or RAM disk, it is advantageous that a recording density is doubled and that a readout transfer rate is doubled.

However, when the RAM signal is detected, it is disadvantageous that crosstalk is generated by an intensity modulation signal from the phase pit and that the RAM signal is buried in the ROM signals to become difficult to be read out. In order to resolve this problem, several propositions has been made until now.

As one of these propositions, a first technology was proposed as a method for dividing the RAM signal by the ROM signal amount (see patent document 1).

A second technology was proposed as a method for feeding back a modulation signal due to the phase pit negatively to a light source drive circuit of the detected light to constrain the intensity modulation signal from the phase pit (a laser feedback method) (patent document 2, non-patent document 1).

The inventors earlier proposed a technology which can accurately read the RAM signal along with the ROM signal without the laser feedback (patent document 3).

On the other hand, as symbolized by the speed competition of CD-ROM drives, transfer rates of drives are increased and it is conceived that an equivalent regeneration characteristic is inevitably required in an apparatus using a concurrent ROM-RAM.

For such requirements, the first technology or the second technology described above is very effective method. However, both technologies have dependency to frequency and, as the transfer rate becomes higher, accurate detection of the RAM signal becomes difficult.

Particularly, in the method of the second technology using the laser feedback, because a loop circuit is formed, if feedback gain is increased when a frequency characteristic deteriorates, oscillation of the circuit is generated and the RAM signal cannot be detected at all. In the method proposed earlier by the inventor et al., if a pit depth is reduced, ROM signal amplitude becomes smaller and it is supposed that signals in a ROM portion of a concurrent ROM-RAM recording medium cannot be read by a normal CD-ROM regeneration apparatus.

(Non-patent document 1)

"One Realization Method for Concurrent ROM-RAM Optical Disk", Journal of the Institute of Television Engineers of Japan Vol. 46 No.10, pp.1319-1324.

(Patent document 1)

Japanese Patent Application Laid-Open Publication No. 1990-91841

(Patent document 2)

Japanese Patent Application Laid-Open Publication No. 1989-166350

(Patent document 3)

PCT/JP03/00145

DISCLOSURE OF THE INVENTION

It is therefore the object of the present invention to provide an optical information processing apparatus which can accurately read a RAM signal at the time of high-speed transfer without reducing a phase pit depth.

A first aspect of the optical information processing apparatus to achieve the above object of the present invention is an optical information processing apparatus for controlling writing and reading of information on a concurrent ROM-RAM recording medium recording ROM signal information as a phase pit on a track and magneto-optically recording RAM signal information on the phase pit, comprising an optical system for forming two (2) first and second beam spots with an interval on the same track of the recording medium; a circuit unit for modulating the first beam spot intensity with a second ROM signal read by the second beam spot; and a circuit for detecting a RAM signal from a first ROM signal read by the first beam spot.

A second aspect of the optical information processing apparatus to achieve the above object of the present invention is the optical information processing apparatus of the first aspect wherein the optical system forms each of the two (2) first and second beam spots by allowing lights from two (2) corresponding laser light sources to pass through two (2) independent object lenses and has first and second optical systems which can perform focusing control for the two (2) first and second beam spots, respectively.

A third aspect of the optical information processing apparatus to achieve the above object of the present invention is the optical information processing apparatus of the first aspect wherein the optical system forms each of the two (2) first and second beam spots by allowing lights from two (2) corresponding laser light sources to pass through a common object lens and by making light axes different from each other such that an interval exists between the first and second beam spots.

A fourth aspect of the optical information processing apparatus to achieve the above object of the present invention is the optical information processing apparatus of the second aspect comprising a head base equipped with the first and second optical systems such that the first and second optical systems are arranged along the common track; and a screw mechanism controlling movement of the head base in the track direction and in the vertical direction.

A fifth aspect of the optical information processing apparatus to achieve the above object of the present invention is the optical information processing apparatus of the second aspect further comprising a circuit unit for obtaining the first beam spot position address and the second beam spot position address from the first ROM signal and the second ROM signal, respectively; a circuit unit for detecting a difference between the first and second beam spot position addresses; and a circuit unit for controlling the first optical system, the second optical system, or the first optical system and the second optical system based on output of the circuit unit detecting the address difference to control the first and second beam spots to be located on the same track.

A sixth aspect of the optical information processing apparatus to achieve the above object of the present invention is the optical information processing apparatus of any one of the first to third aspects wherein the circuit unit for modulating the first beam spot intensity with the second ROM signal has a delay circuit unit which gives the second beam spot a delay amount corresponding to the interval between the first beam spot and the second beam spot if the second beam spot is ahead of the first beam spot and wherein the circuit unit for modulating with the second ROM signal also has an amplification circuit unit which reverses a polarity of the second beam spot and which can control the gain.

An eighth aspect of the optical information processing apparatus to achieve the above object of the present invention is the optical information processing apparatus of any one of the first to third aspects wherein a detracking amount of the first beam spot is scanned to adjust the detracking amount to a position minimizing polarization noise from a phase pit to a RAM signal.

A ninth aspect of the optical information processing apparatus to achieve the above object of the present invention is the optical information processing apparatus of any one of the first to third aspects wherein first and second magnetic heads are disposed to positions opposite to the first and second beam spots on the side of the recording medium opposite to the optical system, and wherein a direction of a magnetic field applied to the second magnetic head opposite to the second beam spot is reversed relative to a direction of a magnetic field applied to the first magnetic head opposite to the first beam spot to erase RAM information by irradiating the second beam spot with high-power light and to record RAM information by modulating an intensity of the light forming the first beam spot.

A tenth aspect of the optical information processing apparatus to achieve the above object of the present invention is the optical information processing apparatus of any one of the first to third aspects wherein the first and second beam spots are formed by laser beams from first and second laser light sources having wavelengths different from each other.

An eleventh aspect of the optical information processing apparatus to achieve the above object of the present invention is the optical information processing apparatus of the second aspect wherein a first optical integral module integrating a laser light source and a light-sensitive element is used for forming the first beam spot and for detecting the first ROM signal and the RAM signal, and wherein a second optical integral module integrating a laser light source and a light-sensitive element is used for forming the second beam spot and for detecting the second ROM signal.

The features of the present invention will become more apparent from the descriptions of the embodiments described in accordance with the following drawings.

BRIEF DESCRIPTION OF DRAWINGS

Fig. 1 is a conceptual diagram enlarging a portion of a recording region of a concurrent ROM-RAM recording medium used in an embodiment of the present invention;

Fig. 2 is a diagram diagrammatically showing a cross-section shape of the concurrent ROM-RAM recording medium used in the embodiment of the present invention, in the direction vertical to a track shown by dotted lines of Fig. 1;

Fig. 3 is a block diagram showing an embodiment configuration of an optical information processing apparatus of the present invention;

Fig. 4 is a block diagram of a detailed configuration example of a main controller 39 of Fig. 3;

Fig. 5 is a diagram showing an arrangement and a beam spot shape of a quadrant photodetector 24;

Fig. 6 is an arrangement diagram of a bisect photodetector 27;

Fig. 7 is a diagram showing a process flow of a method for detecting a ROM signal and a RAM signal using a first optical system and a second optical system, according to the present invention;

Fig. 8 is a diagram diagrammatically showing arrangements of a beam spot 37 formed by the first optical system and a beam spot 38 formed by the second optical system;

Fig. 9 is a diagram showing a waveform of a ROM 1 signal;

Fig. 10 is an explanatory diagram of an embodiment realizing a specific arrangement method for concentrating the beam spots 37 and 38 onto the same track in the information processing apparatus of Fig. 3;

Fig. 11 is a diagram showing a block configuration of the information processing apparatus in the second embodiment of the present invention;

Fig. 12 is a diagram conceptually showing an embodiment configuration of an integrated head 54;

Fig. 13 is a diagram showing an arrangement of photodetectors of the integrated head 54;

Fig. 14 is a diagram conceptually showing an embodiment configuration of an integrated head 57; and

Fig. 15 is a diagram showing an arrangement of photodetectors of the integrated head 57;

BEST MODE FOR CARRYING OUT THE INVENTION

Description will now be made of embodiments of an optical information apparatus according to the present invention.

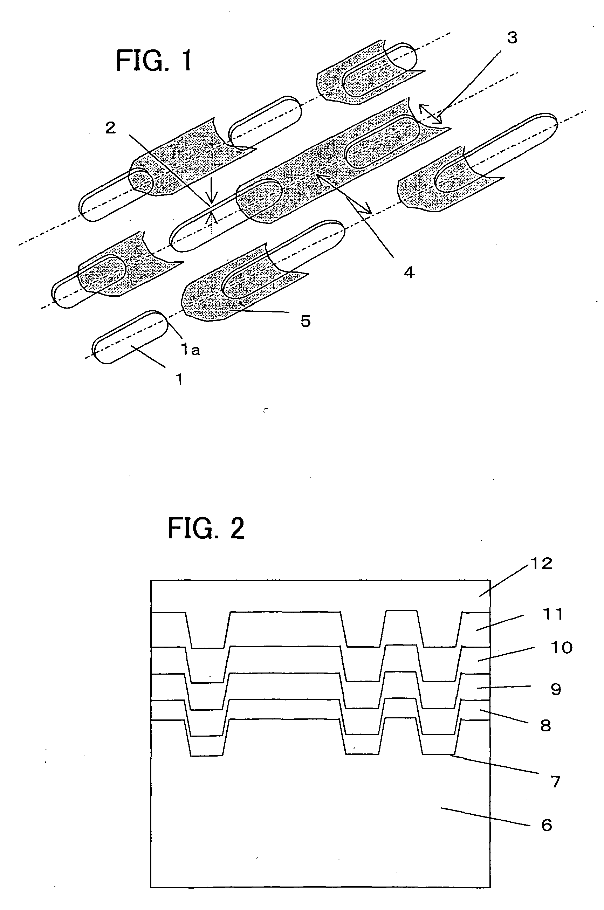

Fig. 1 is a conceptual diagram showing a concurrent ROM-RAM recording medium used in an embodiment of the present invention, enlarging a portion of a recording region where phase pits as ROM signal information and MO (magnetic optical recording) marks as RAM signal information are formed on the disk-shape recording medium, for example.

In the following embodiment of the present invention, as the ROM signal information in the recording medium, a depth 2 of the phase pit 1 is defined as about 100 nm. If a light source with a wavelength $\lambda$ = 785 nm is used, an optical groove depth corresponding to the depth 2 is equivalent to $\lambda/5$. A pit width 3 is 0.5 $\mu$m and a track pitch 4 is 1.6 $\mu$m.

A modulation mode of the phase pit is the EFM (Eight to Fourteen Modulation) modulation converting 8-bit data to 14-bit run length codes and recording a mark length, and a length of a minimum mark length 3T is 0.83 $\mu$m relative to a reference clock length T.

Parameters for these pits are the same as the standard values of a conventional compact disk with a regeneration rate of 1.2 m/sec. The optical information processing apparatus according to the present invention is not limited to an optical disk and can also be utilized with a medium such as an optical card and an optical tape.

In Fig. 1, the concurrent ROM-RAM recording medium can record MO (magnetic optical recording) mark 5 as the RAM signal information on the phase pit 1.

Fig. 2 is a diagram schematically showing a cross-section shape of the concurrent ROM-RAM recording medium used in the embodiment of the present invention, in the direction vertical to a track shown by dotted lines of Fig. 1. The ROM information formed on a metal stamper with physical concavity and convexity is formed as a group of phase pits 7 on an optically near-transparent substrate 6 using an injection molding method.

On the substrate 6, a first dielectric layer 8/ a magnetic optical recording layer 9/ a second dielectric layer 10/ a reflective layer 11 are sequentially formed using a sputtering method and, finally, a protective coat 12 is formed using a spin coat method. The first dielectric layer 8 and the second dielectric layer 10 are provided for optimization of the performance index of the magnetic optical signal due to a multiple-reflection condition of the light and for oxidation and rust prevention effect of the magnetic optical recording layer.

In the embodiment, with reactive sputtering, SiNx is used for the dielectric layers 8, 10. The magnetic optical recording layer 9 is made of TbFeCo with the Curie temperature of about 200 degrees. A1 is used for the reflective layer 11 which serves to protect the magnetic optical recording film and to adjust the light power sensitivity at the time of recording of the magnetic optical signal. As the protective coat 12, near-uniform coating is formed with an ultraviolet-curing resin by the spin coat method and is cured by ultraviolet light. After being cured, a thickness of the resin is about 7 $\mu$m.

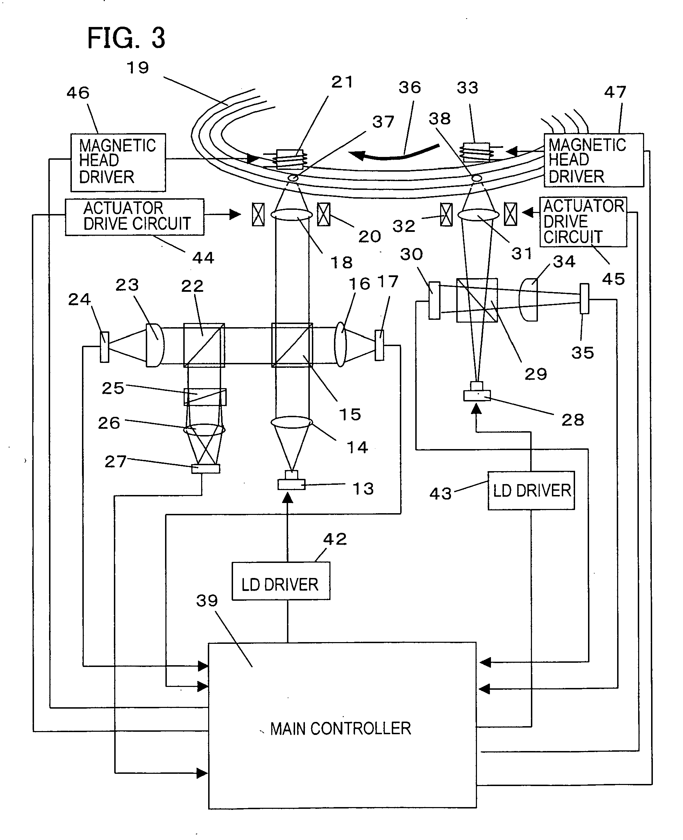

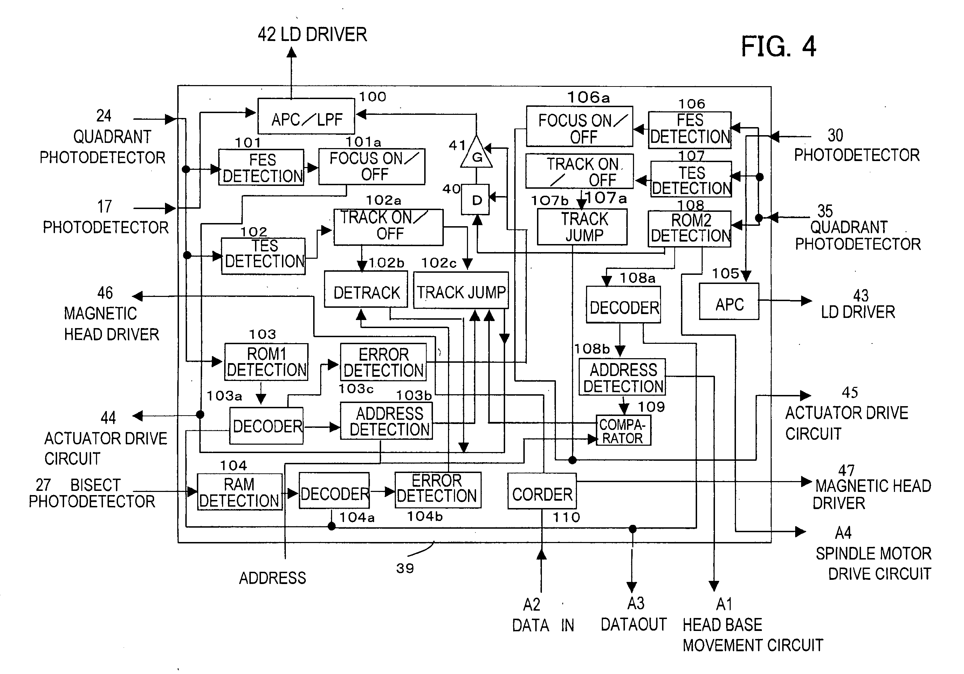

Fig. 3 is a block diagram showing an embodiment configuration of the optical information processing apparatus of the present invention. Fig. 4 is a block diagram of a detailed configuration example of a main controller 39 of Fig. 3.

In Fig. 3, only a portion of an optical disk 19 is shown schematically. The optical disk 19 is rotated in an arrow rotation direction 36 by a spindle motor not shown chucking an internal diameter portion of the optical disk 19.

A laser beam emitted from a semiconductor laser 13 with a wavelength $\lambda$ = 785 nm is collimated by a collimator lens 14 with a focal length f = 15 mm into parallel light and enters into a polarizing beam splitter 15. About 30 % of the entering laser beam is reflected, which is condensed by a condenser lens 16 onto a photodetector 17.

The emission power of the semiconductor laser 13 is monitored by the photodetector 17 and a corresponding electric signal is output from the photodetector 17 to be input into the main controller 39.

Corresponding to the signal output from the photodetector 17, a control signal is generated by an auto power control (APC) circuit 100 (see Fig. 4) of the main controller 39, which is fed back to the semiconductor laser 13 through an LD driver 42. In this way, auto power control is performed.

On the other hand, out of the parallel light from the semiconductor laser 13 entering into the polarizing beam splitter 15, about 70 % is transmitted to be condensed by an object lens 18 with a focal length f = 15 mm and a numerical aperture NA = 0.55 onto the optical disk 19 and forms a beam spot 37.

A size of the beam spot 37 on the optical disk 19 is about 1.22 $\mu$m in the track direction and about 1.34 $\mu$m in the direction vertical to the track (in light intensity distribution $1/e^2$, where e is the base of natural logarithm).

The laser beam is reflected by the optical disk 19, passes through the object lens 18 in the reverse direction and enters into the polarizing beam splitter 15 again. About 30 % of the light is reflected and enters into the polarizing beam splitter 22. About 50 % of the light entering into the polarizing beam splitter 22 is condensed onto a quadrant photodetector 24 through a toroidal lens 23.

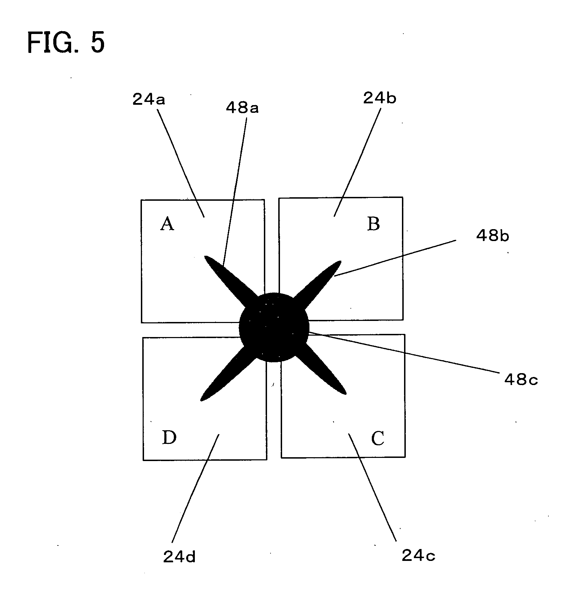

Fig. 5 shows an arrangement and a beam spot shape of the quadrant photodetector 24. The output of the quadrant photodetector 24 is used for generating a control signal controlling the focusing of the object lens 18 in the main controller 39.

In other words, with a focusing error (FES: Focusing Error Signal) detection circuit 101 of the main controller 39, a focusing error (FES: Focusing Error Signal) signal of the object lens 18 is generated as follows.

With the FES detection circuit 101,

$$FES\ (Focusing\ Error\ Signal) = (A + C) - (B + D)$$

is obtained for each output A, B, C, D of the quadrant photodetector 24 using an astigmatism method.

If the laser beam is condensed on the object lens 18 side (near side) onto the optical disk 19, a beam spot 48a is formed, which spreads in the directions of divided portions 24a, 24c of the quadrant photodetector 24. Contrary, if the laser beam is condensed in the direction away from the object lens 18 (on the far side), a beam spot 48b is formed, which spreads in the directions of divided portions 24B, 24d of the quadrant photodetector 24. In the vicinity of a just focus, a near complete circular shape is formed like a beam spot 48c.

The outputs A, B, C, D of the quadrant photodetector 24 are input into a tracking error (TES: Tracking Error Signal) detection circuit 102. With the TES detection circuit 102,

$$TES = (A + B) - (C + D)$$

is obtained as a tracking error (Tracking Error Signal) signal for each output A, B, C, D of the quadrant photodetector 24 using a push-pull method.

Once the FES signal is obtained in this way, a focus on/off circuit 101a is turned on to send a focusing correction control signal to an actuator drive circuit 44. In response to the focusing correction control signal, the actuator drive circuit 44 applies a focusing drive current to an actuator 20 in the direction of repairing a focus error to perform servo control for the focusing position of the object lens 18.

On the other hand, once the TES signal is obtained, a track on/off circuit 102a is turned on to send a tracking correction control signal. In response to the tracking correction control signal, the actuator drive circuit 44 sends a tracking drive current to the actuator 20 in the direction of repairing a tracking error to perform servo control for the track direction position of the object lens 18.

Although a detailed mechanism is not shown in Fig. 3, the actuator 20 is constituted by using an actuator with a four-wire configuration as an embodiment.

The ROM signal is obtained with a ROM 1 detection circuit 103 by adding each output A, B, C, D of the quadrant photodetector 24 as follows.

$$ROM = A + B + C + D$$

In the descriptions below, the ROM signal obtained by the ROM 1 detection circuit 103 based on the output detected by the quadrant photodetector 24 is referred to as a ROM 1 signal.

The ROM 1 signal is processed by a ROM decoder 103a in decoding processing for the run length codes and is output as ROM data from a data output terminal (DATA OUT) A3.

On the other hand, out of the reflected laser beam entering into the polarizing beam splitter 22, the remaining about 50 % of the light is reflected to be divided by a Wollaston prism 25 into two (2) beams depending on the polarizing directions, which are condensed by a condenser lens 26 onto a bisect photodetector 27.

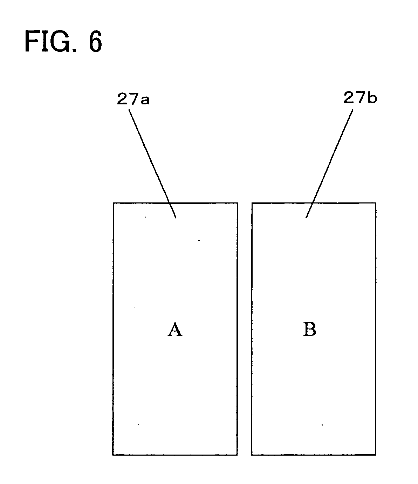

Fig. 6 shows an arrangement diagram of the bisect photodetector 27. Each output A, B of two (2) divided detectors 27a, 27b of the bisect photodetector 27 is input to a RAM detection circuit 104 of the main controller 39. In the RAM detection circuit 104, a magnetic optical (MO) signal is obtained as a RAM signal as follows.

$$RAM = A - B$$

The RAM signal obtained by the RAM detection circuit 104 is decoded by a decoder 104a and output as RAM data from the data output terminal A3.

Other than the method described above, the ROM 1 signal described above can be detected by using each output A, B of two (2) divided detectors 27a, 27b of the bisect photodetector 27 as follows.

$$ROM = A + B$$

For the RAM signal detected by the RAM detection circuit 104, after being decoded by the decoder 104a, error detection is performed by an error detection circuit 104b. In order to correct an error detected by this error detection, the output of the track on/off circuit 102a is compensated by a track correction circuit 102b and is output to the actuator drive circuit 44.

A first optical system described above is a basic configuration example of a ROM signal detection system and a RAM signal detection system in the optical information processing apparatus which is the target of the present invention.

As a feature of the present invention, a second beam spot 38 is formed by adding to this a second optical system with the same configuration as the first optical system described above. In this way, the depth of the phase pit is not needed to be reduced, which is considered as a problem, and the RAM signal can be accurately read even at the time of high-speed transfer.

As the embodiment, also in consideration of miniaturization, the second optical system forming the second beam spot 38 is configured as shown in Fig. 3.

In Fig. 3, a laser beam emitted from a semiconductor laser 28 with a wavelength of 650 nm enters into a beam splitter 29. About 30 % of the light entering into the beam splitter 29 is reflected to illuminate a photodetector 30. The output from the photodetector 30 is guided to an APC circuit 105 of the main controller 39, and a drive current for the semiconductor laser 28 is controlled by the APC circuit 105 through an LD driver 43. In this way, auto power control is performed for the laser beam output of the laser 28.

On the other hand, about 70 % of the light entering into the beam splitter 29 is transmitted and the second beam spot 38 is formed by an object lens 31 on the optical disk 19. The object lens 31 with a focal length f = 15 mm and a numerical aperture NA = 0.50 is used.

A size of the beam spot 38 on the optical disk 19 is about 1.11 $\mu$m in the track direction and about 1.22 $\mu$m in the direction vertical to the track. The laser beam is reflected by the optical disk 19 and enters into the beam splitter 29 again through the object lens 31, and about 30 % of the entering light is reflected. The reflected light is condensed onto a quadrant photodetector 35 through a cylindrical lens 34.

The arrangement of the quadrant photodetector 35 is as shown in Fig. 5 as well, and a FES signal, a TES signal and a ROM signal are obtained based on the output of the quadrant photodetector 35 by using the same calculation method as the first optical system forming the beam spot 37 with a FES detection circuit 106, a TES detection circuit 107 and a ROM 2 detection circuit 108 of the main controller 39, respectively. Hereinafter, the ROM signal detected by the second optical system is referred to as a ROM 2 signal.

Based on the obtained FES signal, a focus on/off circuit 106a is turned on; the current for the focusing drive is applied from an actuator drive circuit 45 to an actuator 32; at the same time, based on the TES signal, a track on/off circuit 107a is turned on; the current for the tracking drive is applied from the actuator drive circuit 45 to the actuator 32; and servo control is performed for focusing and tracking.

In the second optical system, in order to reduce the number of the parts, lenses are cut out which corresponds to the collimator lens 14 and the condenser lens 16 for the auto power control in the first optical system.

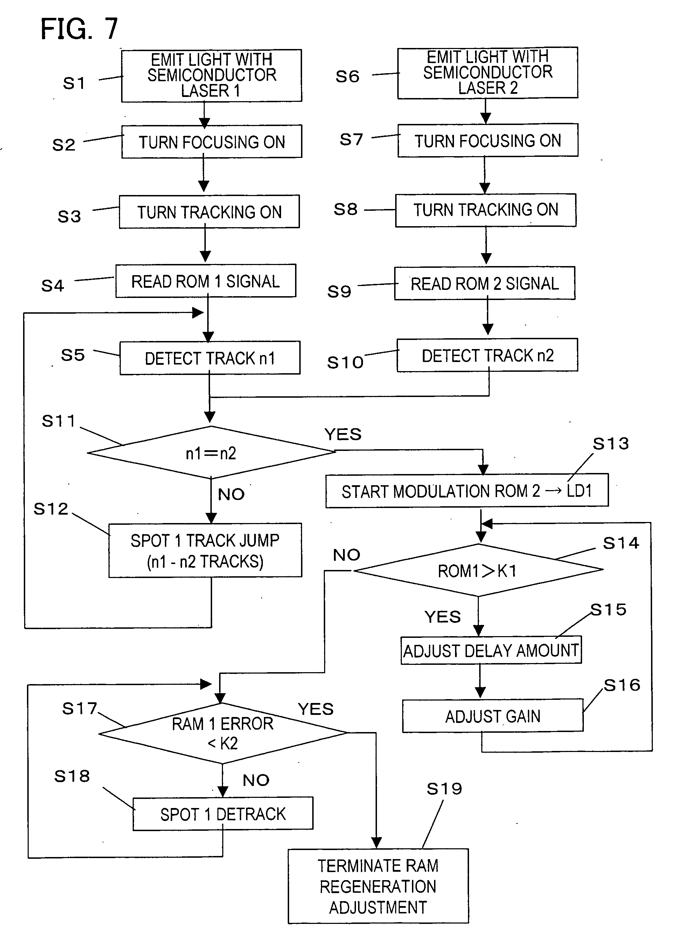

Detailed descriptions are made with reference to a process flow of Fig. 7 for a method of detecting the ROM signal and the RAM signal using the first optical system and the second optical system, according to the present invention.

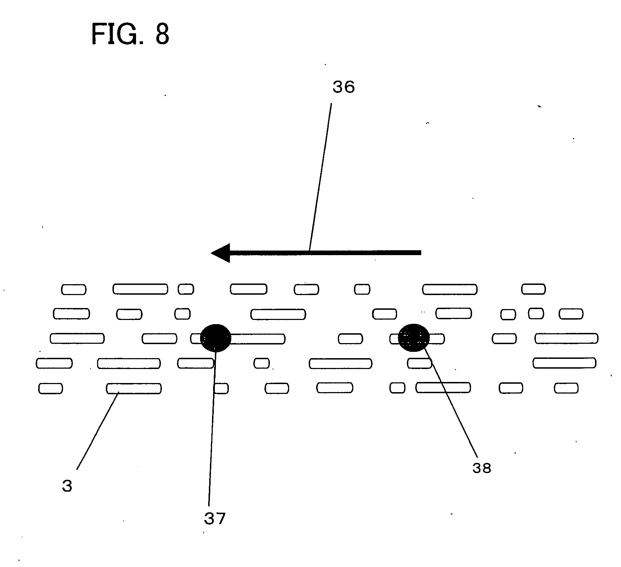

Fig. 8 shows arrangements of the beam spot 37 formed by the first optical system and the beam spot 38 formed by the second optical system schematically. The beam spot 38 is arranged ahead of the beam spot 37 on the same track in the movement direction 36 of the optical disk.

In Fig. 7, when the first semiconductor laser 13 emits light (step S1), the focusing on/off circuit 101a is turned on such that the beam spot 37 is formed (step S2) and the tracking on/off circuit 102a is turned on (step S3).

In this way, the ROM 1 signal is read by the ROM 1 detection circuit 103 (step S4). The ROM 1 signal is then processed in the decoding processing by the decoder 103a, and from the decoded output, an address detection circuit 103b detects a track number n1 of the track where the beam spot 37 is located (step S5).

Similarly, when the second semiconductor laser 28 emits light (step S6), the focusing on/off circuit 106a is turned on such that the beam spot 38 is formed (step S7) and the tracking on/off circuit 107a is turned on (step S8).

In this way, the ROM 2 signal is read by the ROM 2 detection circuit 108 (step S9). The ROM 2 signal is then processed in the decoding processing by the decoder 108a, and from the decoded output, an address detection circuit 108b detects a track number n2 of the track where the beam spot 37 is located.

When the address detection circuits 103b, 108b detect the track numbers n1, n2 of the tracks where the beams spot 37 and the beam spot 38 are located, respectively, a comparison circuit 109 compares these track numbers (step S11).

If a difference exists in this comparison (step S11, NO), the difference between the track numbers (n1- n2) is detected, and the beam spot 37 is controlled for performing a track jump of the track difference (n1 - n2). In other words, based on the output of the comparison circuit 109 corresponding to the difference (n1 - n2) between the track numbers, a correction signal is sent to a track jump circuit 102c, and the current corresponding to the correction signal is applied from the actuator drive circuit 44 to the actuator 20 to perform the track jump of the difference (n1 - n2) between the track numbers. In this way, the beam spots 37 and 38 can be located on the same track.

In the embodiment of the present invention, although the main controller 39 of Fig. 4 forces the beam spot 37 to perform the track jump, it can be configured and controlled such that the beam spot 38 or both the beam spots 37 and 38 performs the track jump. Alternatively, as described later, by physically integrating the first optical system and the second optical system on a head base, the beam spots 37 and 38 can be easily positioned on the same track. It is only needed to be able to move the beam spots 37 and 38 to the same desired track finally.

On the other hand, if it is confirmed that the beam spots 37 and 38 are on the same track in step S11 (step S11, Yes), based on the ROM 2 signal detected by the ROM 2 detection circuit 108 of the main controller 39, an instruction is sent from the output of the quadrant photodetector 35 to the LD driver 42 through the APC circuit 100 to modulate the light output of the semiconductor laser 13.

In the modulation of the light output, based on output of an error detection circuit 103c, a delay amount of a delay amount circuit 40 and an amplification rate of an amplification circuit 41 are adjusted such that the amplitude of the ROM 2 signal detected from the quadrant photodetector 24 approaches to a predetermined value K1, for example, zero.

The optical disk is controlled such that the linear velocity of the beam spot position becomes approximately 4.8 m/sec and the beam spots 37 and 38 are arranged to have an interval of about 25 mm. Therefore, it takes about 5.2 msec for the pit signal of the optical disk 19 to move from the position of the beam spot 38 to the position of the beam spot 37.

With the instruction from the error detection circuit 103c of the main controller, the delay amount of the delay amount circuit 40 is set to about 5.2 msec (step S15). When the light output of the semiconductor laser 13 is modulated, the gain adjustment is performed by the amplification circuit 41 such that the polarity is reversed relative to the polarity for the semiconductor laser 28 for the ROM 2 signal (step S16).

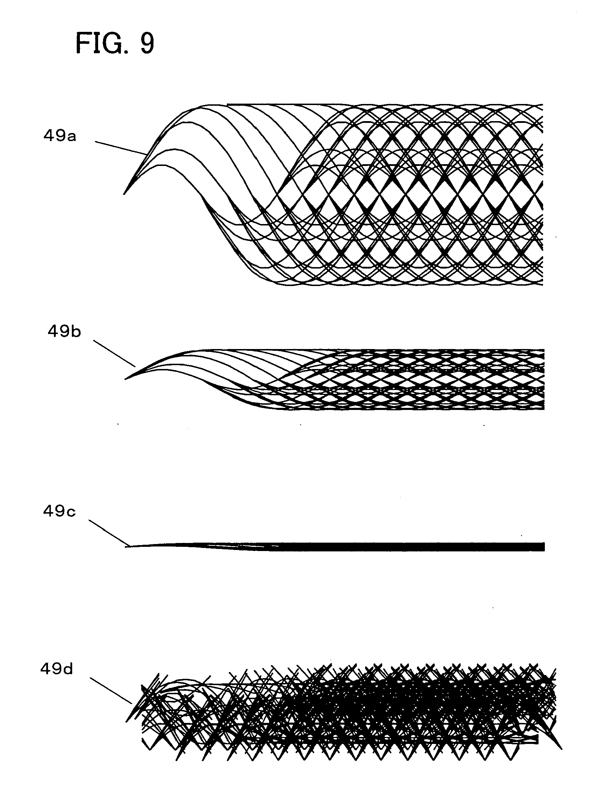

Fig. 9 is a diagram showing a waveform of the ROM 1 signal. In Fig. 9, if the light output of the semiconductor laser 13 is not modulated based on the ROM 2 signal, the ROM 1 signal has a waveform such as 49a.

For the ROM 1 signal, if the phases of the ROM 1 signal and the ROM 2 signal are approximately matched by adjusting the delay amount of the delay amount circuit 40, since the LD driver 42 is modulated such that the polarity is reversed relative to the polarity for the semiconductor laser 28 for the ROM 2 signal, the amplitude of the ROM 1 signal is decreased as shown by 49b.

If the gain of the amplification circuit 41 is also adjusted, optimization is performed for the delay amount and the gain, and the ROM 1 signal waveform becomes approximately zero as shown by 49c. If the mismatch with the optimal delay amount from the delay amount circuit 41 is considerable or if oscillation is generated because the gain in the amplification circuit is too high, the ROM 1 signal waveform becomes a signal with considerable noises as shown by 49d.

In the case of using the conventional laser feedback method described above, since negative feedback is performed by one (1) optical pickup in a loop circuit to a laser diode, if the transfer rate is increased, the delay amount is increased and a waveform like the ROM 1 signal 49d is generated.

Contrary, according to the present invention, since the ROM 2 signal detected with the position of the beam spot 38 of the second optical system is sent as the modulation signal to the first optical system forming the subsequent beam spot 37, a delay amount corresponding to the interval between the beam spots 37 and 38 can be easily adjusted.

As described above, by making the ROM 1 signal approximately zero, the RAM signal detected by the bisect photodetector 27 can be read without being affected by the intensity modulation of the phase pit signal.

However, as disclosed in Journal of the Institute of Television Engineers of Japan Vol. 46 No.10, pp. 1319-1324, a problem is posed to the RAM signal not only by the modulation noise due to the phase pit, but also by the polarization noise.

The polarization noise is caused by rotation and double reflection of a plane of polarization due to a curve portion of the phase pit (e.g., an edge portion 1a of the phase pit 1 shown in Fig. 1). Such rotation of a plane of polarization due to the curve portion 1a of the phase pit is caused by the asymmetry of the pit or the detracking.

Therefore, in the flow of Fig. 7, an error rate of the RAM 1 signal is also detected by the error detection circuit 104b (step S17); if the error rate is lower than a predetermined threshold value K2, the RAM regeneration is terminated (step S19); and if the error rate is higher (step S17, No), the spot of the light beam is adjusted by a detracking circuit 102b to the optimum track position (step S18).

For recording the RAM signal, magnetic heads 21 and 33 are disposed oppositely to the object lenses 18, 31, respectively, with the optical disk 19 of Fig. 3 existing therebetween. First, the beam spots 37 and 38 are disposed on the same track and while irradiating the beam spot 38 with about 8 mW high-power light, a certain amount of an electric current is sent to the magnetic head 33 to erase RAM information.

Subsequently, to the magnetic head 21, while sending a certain electric current such that a magnetic field opposite to the magnetic head 33 can be applied, a modulation pulse signal is injected by the LD driver 42 into the semiconductor laser 14 to record RAM information.

As the RAM information, data input from a data input terminal A2 of the main controller 39 is run-length coded, and an electric current is supplied to a magnetic head driver 46.

In the embodiment configuration of the present invention, information can be recorded by only one (1) rotation of the optical disk 19 regardless of light modulation recording. As a variation of the embodiment, each of the beam spots 37 and 38 can be disposed on a different track to record information on each track, even though two (2) steps are needed for erasing and recording.

When RAM information was recorded with the EFM modulation mode and the mark length same as the ROM signal according to the first embodiment of the present invention described above to perform jitter measurement, a RAM jitter value of about 7 % was obtained in terms of clock versus data.

A ROM jitter detected from the ROM 2 signal is about 4 % and a problem-free characteristic is obtained for practical use.

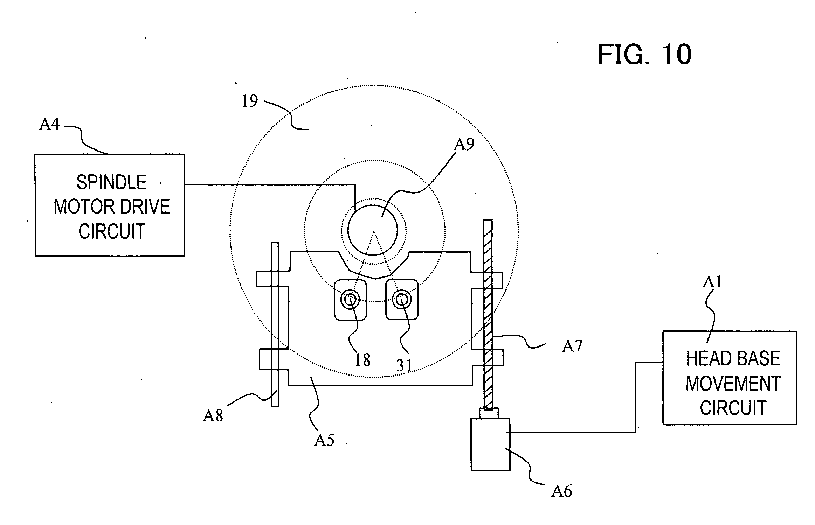

Fig. 10 is a diagram for describing an embodiment realizing a specific arrangement method for concentrating the beam spots 37 and 38 onto the same track in the information processing apparatus of Fig. 3.

Each optical system having the condenser lenses 18, 31 of Fig. 3 is disposed on a head base A5. The head base A5 can be moved by a guide rail A8 and a ball screw A7 in the direction of the radius of the optical disk which is rotated around an axis A9 by a spindle motor drive circuit A4. Specifically, the movement to the desired radial position can be performed by driving a motor A6 with a head base movement circuit A1 in accordance with a command from the main controller 39.

The object lenses 18 and 31 are disposed at radial positions having approximately the same distances from the rotation center A9 of the optical disk 19. In such an arrangement, with regard to the beam spots 37 and 38 formed respectively on the optical disk by the object lenses 18 and 31, a delay amount for laser feedback described later may be varied due to an accessed radial position because the delay amount is depending on length of an arc passing through two (2) beam spots 37 and 38.

This variation in the delay amount due to the radial position can be resolved by finding a physical track position from address information detected from the ROM 1 signal or the ROM 2 signal and by shifting the delay circuit 40 to a predetermined value at the time of access.

The variation can be also resolved by adjusting the spindle motor drive circuit A4 in accordance with the physical track position to change the number of rotations of the spindle motor A9 depending on the radial position.

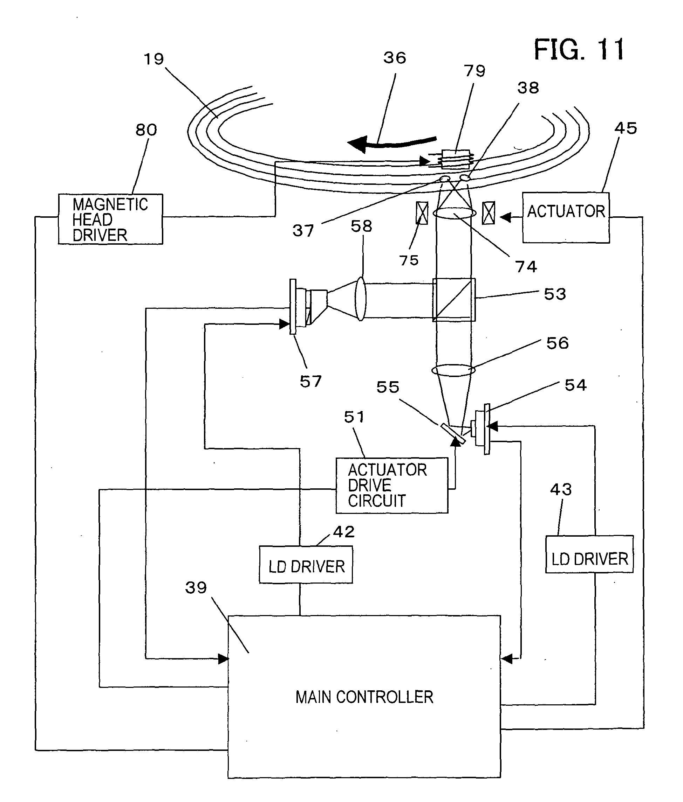

Fig. 11 shows a block configuration of the information processing apparatus in the second embodiment of the present invention. As compared to the configuration of the information processing apparatus of the first embodiment shown in Fig. 3, a feature of the embodiment of Fig. 11 is that two (2) beam spots 37, 38 are formed with the use of one (1) object lens 74.

As integral heads 54, 57, an integral head having a configuration of an optical head invented by the inventor et al. can be used (see Japanese Patent Application Laid-Open Publication Nos. 2001-34999 and 2001-236672). The main controller 39 has the same configuration as Fig. 4.

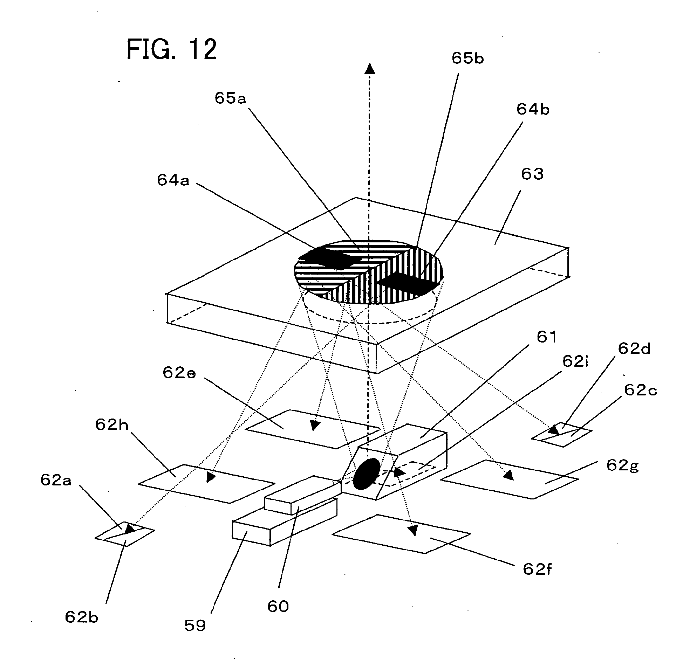

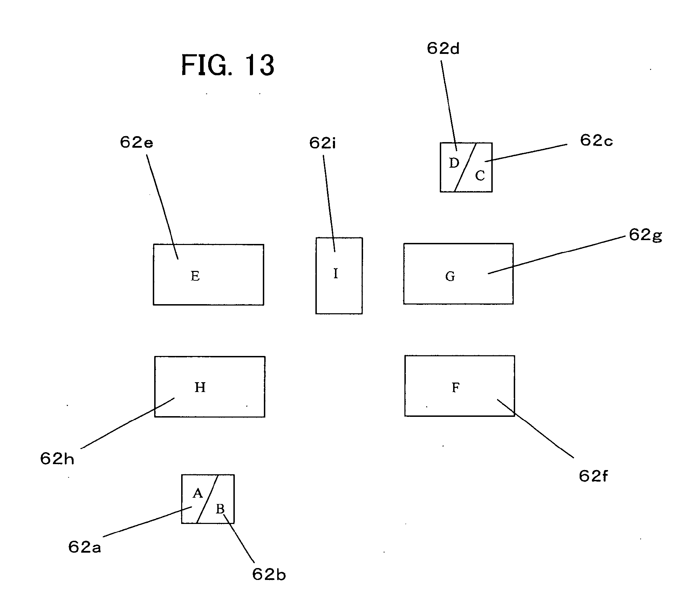

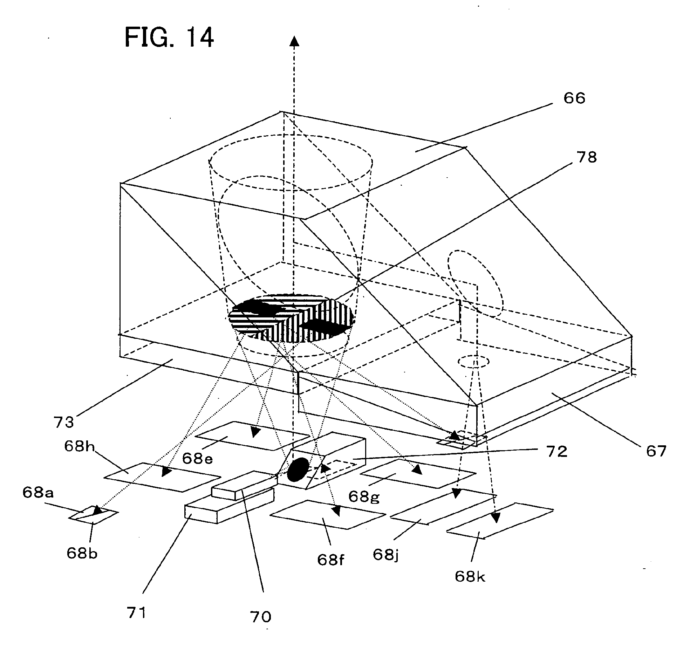

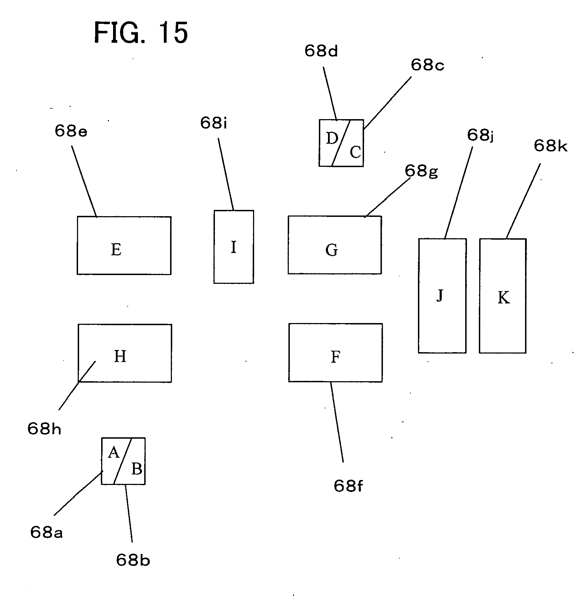

Fig. 12 and Fig. 13 show an embodiment configuration of the integral head 54 conceptually. The integral head 54 uses a semiconductor laser 60 with a wavelength $\lambda = 650$ nm as a light source. On the other hand, the integral head 57 is configured as shown in Fig. 14 and Fig. 15 and uses a semiconductor laser 70 with a wavelength $\lambda = 785$ nm.

The light emitted from the integral head 54 is reflected by a MEMS (Micro Electro Mechanical System) mirror 55, collimated by a collimator lens 56 into parallel light and enters into a dichroic mirror 53. Approximately 100 % of the entering light is transmitted to be condensed by the object lens 74 onto the optical disk 19 as the beam spot 38.

The light reflected by the optical disk 19 passes through the objection lens 74, is transmitted through the dichroic mirror 53, passes through the collimator lens 56 and is reflected by the MEMS mirror 55 to return to the integrated head 54 again. Instead of the MEMS mirror, a so-called galvanometer mirror can be used. However, the MEMS is useful for miniaturization of the apparatus.

On the other hand, the light emitted from the integral head 57 is collimated by a collimator lens 58 into parallel light and enters into the dichroic mirror 53. Approximately 100 % of the entering light is reflected to be condensed by the object lens 74 onto the optical disk 19 as the beam spot 37.

The light reflected by the optical disk 19 passes through the objection lens 74, is reflected by the dichroic mirror 53 and passes through the collimator lens 58 to return to the integrated head 57 again.

For the adjustment of the beam spots 37 and 38, the light axes are misaligned at about 0.3 degrees from a viewpoint of an object lens position auto collimator. Since a focal length f = 3 mm, an interval between the beam spots 37 and 38 is about 16 $\mu$m on the optical disk 19.

In the configuration shown in Fig. 11, since only one (1) object lens 74 exists, the focusing and the tracking of the beam spots 37 and 38 cannot be controlled separately.

Therefore, with regard to the beam spot 37, an actuator 75 is controlled by the actuator drive circuit 45 with the FES signal and the TES signal detected from the integral head 57.

With regard to the beam spot 38, the MEMS mirror 55 is controlled by an actuator drive circuit 51 with the TES signal detected from the integral head 54; with regard to the focusing, the collimator lens 56 is adjusted such that a TES signal amplitude of the integral head 54 is maximized at the time of initial adjustment of the optical system; and after that, the focusing is dependent on focusing of the integral head 57.

The configuration of the integral head 54 is described below. In Fig. 12 and Fig. 13, a heat sink 59 and the semiconductor laser 60 are soldered on a surface where divided photodetectors 62a to 62i are disposed. The light emitted from the semiconductor 60 is reflected by a reflective mirror 61. About 5 % of the light applied to the reflective mirror 61 is deflected by a surface of the mirror 61 to illuminate the divided photo detector 62i. With an output signal from this divided photo detector 62i, auto power control is performed for adjusting the light power of the semiconductor laser.

About 95 % of a light amount of the light reflected by the reflective mirror 61 is emitted through a substrate 63 where hologram patterns are formed. The light is reflected by the optical disk 19 and consequently returned to reach the substrate 63 again, and the hologram patterns 64a and 64b respectively generate deflected lights, which illuminate dividing lines between the photodetectors 62a and 62b and between 62c and 62d, respectively.

On the other hand, the lights deflected by the hologram patterns 65a and 65b illuminate 62g and 62h and 62e and 62f, respectively. In the arrangement diagram shown in Fig. 13, the focusing error (FES) signal is detected from the outputs A, B, C, D of the photodetectors 62a to 62d using a double-knife-edge method as follows.

$$FES = (A + C) - (B + D)$$

The tracking error signal is detected from the outputs E, F, G, H of the photodetectors 62e to 62h using a push-pull method as follows.

$$TES = (E + F) - (F + G)$$

The ROM signal is detected for each output A, B, C, D, E, F, G, H of the photodetectors 62a to 62h as follows.

$$ROM = A + B + C + D + E + F + G + H$$

The ROM signal corresponds to the ROM 2 signal of the information processing apparatus shown in Fig. 3. In the embodiment, only the TES and ROM signals are used. For the hologram patterns 64a, 64b, 65a, 65b, diffraction efficiency of the plus and minus first order light is about 18 %.

The configuration of the integral head 57 is described using Fig. 14 and Fig. 15. With regard to a method for detecting the FES and the TES using the holograms and a method of the auto power control, these methods are completely the same as the integral head 54.

As shown in Fig. 14, a polarizing beam splitter 66 is disposed on a substrate 73 where hologram patterns are formed. About 70 % of the light transmitted through the substrate 73 is transmitted through the polarizing beam splitter 66.

The light is reflected by the optical disk 19 and consequently returned to illuminate the polarizing beam splitter 66 which transmits about 70% of the light, and as is the case with the integral head 54, the servo signals are detected with the hologram pattern 78 as follows.

$$FES = (A + C) - (B + D)$$

$$TES = (E + F) - (F + G)$$

About 30 % of the light illuminating the polarizing beam splitter 66 is reflected to be divided by a Wollaston prism 67 into two (2) beams depending on the polarizing directions, which illuminate photodetectors 68i and 68k.

The ROM signal corresponds to the ROM 1 signal of the information processing apparatus 1 shown in Fig. 3 and is detected for each output A, B, C, D, E, F, G, H, I, J, K of the photodetectors as follows.

$$ROM = A + B + C + D + E + F + G + H + I + J + K$$

On the other hand, the RAM signal is detected for each output J, K of the photodetectors 68j, 68k as follows.

$$RAM = J - K$$

When the RAM information is detected, although in the information processing apparatus 1 shown in Fig. 3, adjustment must be needed at a portion with a long delay amount of 5.2 msec on the nsec level which is the order of the pit signal, in the information processing apparatus of the second embodiment shown in Fig. 11, since the interval between the beam spots 37 and 38 is 16 $\mu$ m and a short delay amount of about 3 $\mu$ sec is generated when rotating the optical disk 19 at a linear velocity of 4.8 m/sec, the delay circuit can be easily designed.

Since the integral heads 54 and 57 and the MEMS mirror 55 is used and only one (1) object lens 1 is used, the size and weight of the optical head can be dramatically reduced.

For recording of the RAM information, a floating-type magnetic head 79 with a slider is disposed at a position opposite to the object lens 74 with the optical disk 19 existing therebetween. The position of the magnetic head 38 is set to a position where a good characteristic can be obtained at the time of recording with the beam spot 37. For recording the RAM information, while irradiating the optical disk 19 with about 7 mW high-power light from the integral head 57, a modulation magnetic field is applied by a magnetic head driver 80 to record the information.

In the second embodiment configuration of Fig. 2 described above, when the RAM information was recorded with the EFM modulation mode and the mark length same as the ROM information to perform jitter measurement, a RAM jitter value of about 7 % was obtained in terms of clock versus data. A ROM jitter detected from the ROM 2 is about 4 % and a problem-free characteristic is obtained for practical use.

By using the optical information processing apparatus according to the present invention, the RAM signal can be accurately read even at the time of high-speed transfer without reducing the depth of the phase pit. With regard to the signal in the ROM portion of the ROM-RAM disk, since the depth of the phase pit can be set to a depth of a conventional ROM signal and a modulation degree of the ROM signal can be heightened, the signal can be read in a conventional ROM detection apparatus. Since a plurality of (n) beam spots of the detection light exists, the ROM signal can be read at n-fold or more speed and the RAM signal can be read and written. Since the integral head module and the MEMS mirror are used, the apparatus can be planned to be miniaturized.

INDUSTRIAL APPLICABILITY

According to the present invention with the features, an optical information processing apparatus can be provided which can accurately read a RAM signal at the time of high-speed transfer without reducing a phase pit depth. With regard to the signal in the ROM portion of the ROM-RAM disk, since the phase pit depth can be set to a depth of a conventional ROM signal and a modulation degree of the ROM signal can be heightened, the signal can be read in a conventional ROM detection apparatus.

By applying the principle of the present invention to provide a plurality of (n) beam spots of the detection light, the apparatus can be used such that the ROM signal can be read at n-fold or more speed and such that the RAM signal can be read and written. Since the integral head module is used and the MEMS mirror is used, the apparatus can be planned to be miniaturized.

**Claims**

1.  An optical information processing apparatus for controlling writing and reading of information on a concurrent ROM-RAM recording medium recording ROM signal information as a phase pit on a track and magneto-optically recording RAM signal information on the phase pit, comprising:

    an optical system for forming two (2) first and second beam spots with an interval on the same track of the recording medium;
    a circuit unit for modulating the first beam spot intensity with a second ROM signal read by the second beam spot; and
    a circuit for detecting a RAM signal from a first ROM signal read by the first beam spot.

2.  The optical information processing apparatus of claim 1,
    wherein the optical system forms each of the two (2) first and second beam spots by allowing lights from two (2) corresponding laser light sources to pass through two (2) independent object lenses and has first and second optical systems which can perform focusing control for the two (2) first and second beam spots, respectively.

3.  The optical information processing apparatus of claim 1,
    wherein the optical system forms each of the two (2) first and second beam spots by allowing lights from two (2) corresponding laser light sources to pass through a common object lens and by making light axes different from each other such that an interval exists between the first and second beam spots.

4.  The optical information processing apparatus of claim 2, comprising:

    a head base equipped with the first and second optical systems such that the first and second optical systems are arranged along the common track; and
    a screw mechanism controlling movement of the head base in the track direction and in the vertical direction.

5.  The optical information processing apparatus of claim 2, further comprising:

    a circuit unit for obtaining the first beam spot position address and the second beam spot position address from the first ROM signal and the second ROM signal, respectively;
    a circuit unit for detecting a difference between the first and second beam spot position addresses; and
    a circuit unit for controlling the first optical system, the second optical system, or the first optical system and the second optical system based on output of the circuit unit detecting the address difference to control the first and second beam spots to be located on the same track.

6. The optical information processing apparatus of claims 1 to 3,
wherein the circuit unit for modulating the first beam spot intensity with the second ROM signal has a delay circuit unit which gives the second beam spot a delay amount corresponding to the interval between the first beam spot and the second beam spot if the second beam spot is ahead of the first beam spot, and
wherein the circuit unit for modulating with the second ROM signal also has an amplification circuit unit which reverses a polarity of the second beam spot and which can control the gain.

7. The optical information processing apparatus of claim 6,
wherein the gain of the amplification circuit unit is set to a value minimizing fluctuations of the first ROM signal.

8. The optical information processing apparatus of any one of claims 1 to 3,
wherein a detracking amount of the first beam spot is scanned to adjust the detracking amount to a position minimizing polarization noise from a phase pit to a RAM signal.

9. The optical information processing apparatus of any one of claims 1 to 3,
wherein first and second magnetic heads are disposed to positions opposite to the first and second beam spots on the side of the recording medium opposite to the optical system, and
wherein a direction of a magnetic field applied to the second magnetic head opposite to the second beam spot is reversed relative to a direction of a magnetic field applied to the first magnetic head opposite to the first beam spot to erase RAM information by irradiating the second beam spot with high-power light and to record RAM information by modulating an intensity of the light forming the first beam spot.

10. The optical information processing apparatus of any one of claims 1 to 3,
wherein the first and second beam spots are formed by laser beams from first and second laser light sources having wavelengths different from each other.

11. The optical information processing apparatus of claim 2,
wherein a first optical integral module integrating a laser light source and a light-sensitive element is used for forming the first beam spot and for detecting the first ROM signal and the RAM signal, and wherein a second optical integral module integrating a laser light source and a light-sensitive element is used for forming the second beam spot and for detecting the second ROM signal.

FIG. 1

FIG. 2

# FIG. 3

EP 1 667 140 A1

# FIG. 4

42 LD DRIVER

24 QUADRANT PHOTODETECTOR

17 PHOTODETECTOR

46 MAGNETIC HEAD DRIVER

44 ACTUATOR DRIVE CIRCUIT

27 BISECT PHOTODETECTOR

100 APC／LPF

101 FES DETECTION

101a FOCUS ON／OFF

102 TES DETECTION

102a TRACK ON／OFF

102b DETRACK

102c TRACK JUMP

103 ROM1 DETECTION

103a DECODER

103c ERROR DETECTION

103b ADDRESS DETECTION

104 RAM DETECTION

104a DECODER

104b ERROR DETECTION

110 CORDER

41 G

40 D

106a FOCUS ON／OFF

107b 107a TRACK ON／OFF

107b TRACK JUMP

106 FES DETECTION

107 TES DETECTION

108 ROM2 DETECTION

108a DECODER

108b ADDRESS DETECTION

109 COMPA-RATOR

105 APC

30 PHOTODETECTOR

35 QUADRANT PHOTODETECTOR

43 LD DRIVER

45 ACTUATOR DRIVE CIRCUIT

47 MAGNETIC HEAD DRIVER

A4 SPINDLE MOTOR DRIVE CIRCUIT

ADDRESS

39

A2 DATA IN

A3 DATAOUT

A1 HEAD BASE MOVEMENT CIRCUIT

# FIG. 5

# FIG. 6

27a          27b

A          B

# FIG. 7

S1 — EMIT LIGHT WITH SEMICONDUCTOR LASER 1

S6 — EMIT LIGHT WITH SEMICONDUCTOR LASER 2

S2 — TURN FOCUSING ON

S7 — TURN FOCUSING ON

S3 — TURN TRACKING ON

S8 — TURN TRACKING ON

S4 — READ ROM 1 SIGNAL

S9 — READ ROM 2 SIGNAL

S5 — DETECT TRACK n1

S10 — DETECT TRACK n2

S11 — $n1 = n2$

YES

S13 — START MODULATION ROM 2 → LD1

NO

S12 — SPOT 1 TRACK JUMP (n1 - n2 TRACKS)

S14 — $ROM1 > K1$

NO

YES

S15 — ADJUST DELAY AMOUNT

S16 — ADJUST GAIN

S17 — RAM 1 ERROR $< K2$

YES

NO

S18 — SPOT 1 DETRACK

S19 — TERMINATE RAM REGENERATION ADJUSTMENT

FIG. 8

## FIG. 9

EP 1 667 140 A1

# FIG. 10

SPINDLE MOTOR DRIVE CIRCUIT

HEAD BASE MOVEMENT CIRCUIT

A4

19

A9

A1

A7

18    31

A8

A5

A6

FIG. 11

FIG. 12

# FIG. 13

62d

62e

62i

62c

D / C

E

I

G

62g

H

F

62h

62a

A / B

62b

62f

# FIG. 14

# FIG. 15

## INTERNATIONAL SEARCH REPORT

| International application No. |
|---|
| PCT/JP03/11822 |

| A. CLASSIFICATION OF SUBJECT MATTER |
|---|
| Int.Cl$^7$ G11B11/105 |

According to International Patent Classification (IPC) or to both national classification and IPC

| B. FIELDS SEARCHED |
|---|

Minimum documentation searched (classification system followed by classification symbols)
Int.Cl$^7$ G11B11/105, G11B7/00-7/0065

Documentation searched other than minimum documentation to the extent that such documents are included in the fields searched
Jitsuyo Shinan Koho          1922-1996   Jitsuyo Shinan Toroku Koho   1996-2003
Kokai Jitsuyo Shinan Koho   1971-2003   Toroku Jitsuyo Shinan Koho   1994-2003

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| A | JP 7-65375 A (Fujitsu General Ltd.), 10 March, 1995 (10.03.95), Full text; all drawings (Family: none) | 1-11 |
| A | JP 8-69659 A (Deutsche Thomson Brandt GmbH.), 12 March, 1996 (12.03.96), Full text; all drawings & EP 681290 A1          & DE 4415508 A & US 5550800 A1 | 1-11 |
| A | JP 6-202820 A (Deutsche Thomson Brandt GmbH.), 22 July, 1994 (22.07.94), Full text; all drawings & EP 575934 A2          & DE 4220486 A & US 5715232 A1 | 1-11 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 06 January, 2004 (06.01.04) | Date of mailing of the international search report 27 January, 2004 (27.01.04) |
|---|---|
| Name and mailing address of the ISA/ Japanese Patent Office | Authorized officer |
| Facsimile No. | Telephone No. |

Form PCT/ISA/210 (second sheet) (July 1998)

## INTERNATIONAL SEARCH REPORT

International application No.

PCT/JP03/11822

C (Continuation). DOCUMENTS CONSIDERED TO BE RELEVANT

| Category* | Citation of document, with indication, where appropriate, of the relevant passages | Relevant to claim No. |
|---|---|---|
| A | JP 7-201096 A (Sony Corp.),<br>04 August, 1995 (04.08.95),<br>Full text; all drawings<br>(Family: none) | 1-11 |

Form PCT/ISA/210 (continuation of second sheet) (July 1998)

28